# EUROPEAN PATENT APPLICATION

(11) **EP 4 810 450 A1**
(43) Date of publication of application: **23.09.2026**
(21) Application number: 24906490.8
(22) Date of filing: 20.12.2024
(51) Int. Cl.: C03B 23/03

(54) **FORMED GLASS PANE, GLASS PANE FORMING METHOD, GLASS PANE FORMING DEVICE AND VEHICLE**

(30) Priority: 21.12.2023 CN 202311774212
(71) Applicant: Fuyao Glass Industry Group Co., Ltd., Fuqing, Fujian 350300 (CN)
(72) Inventor: WANG, Hongfei, Fuzhou, Fujian 350300 (CN); ZHAN, Zhiyu, Fuzhou, Fujian 350300 (CN); YU, Dahui, Fuzhou, Fujian 350300 (CN); GUAN, Jinliang, Fuzhou, Fujian 350300 (CN)
(74) Representative: Mewburn Ellis LLP
(86) International application number: PCT/CN2024/140803
(87) International publication number: WO 2025/131015

(57) **Abstract**

The present disclosure provides a formed glass panel, a glass panel forming method, a glass panel forming apparatus, and a vehicle. The formed glass panel has a first curvature in a first direction and a second curvature in a second direction, where the first direction and the second direction are perpendicular to each other. The formed glass panel includes first support positions located at edge bending portions and second support positions located between two adjacent edge bending portions, where the second support positions start forming prior to the first support positions. The formed glass panel has an arc depth per meter *d* in the first direction satisfying 30mm/m≤*d*≤80mm/m. The formed glass panel has an arc depth per meter *D* in the second direction satisfying 25mm/m≤*D*≤60mm/m. As such, a formed glass with a smaller bending tendency opposite to an arc depth direction can be formed, which can be applied to vehicle windshields, rear windshields, sunroofs, side windows, etc.

## Description

### CROSS-REFERENCE TO RELATED APPLICATION(S)

This application claims priority to Chinese Patent Application No. 202311774212.0, filed December 21, 2023, entitled "FORMED GLASS PANEL, GLASS PANEL FORMING METHOD, GLASS PANEL FORMING APPARATUS, AND VEHICLE", the entire disclosure of which is incorporated herein by reference.

### TECHNICAL FIELD

This disclosure relates to the field of vehicle parts manufacturing technology, and in particular to a glass panel forming method, a glass panel forming apparatus, a formed glass panel, and a vehicle.

### BACKGROUND

Vehicles have always been one of the most important means of transportation in human society. As people's functional requirements for vehicles increase, the area occupied by glass on vehicles is becoming larger, the design of glass shapes is becoming more complex, and the requirements for the optical refraction of glass are becoming more stringent.

To achieve a curved glass design, the glass manufacturing process typically includes heating and pressing processes. Therefore, during the forming process, the glass is prone to bending at edges and other parts in a direction opposite to an arc depth direction, leading to optical distortion at the edges of the formed glass panel. Furthermore, the deformation problem becomes more serious as the curvature of the glass increases.

### SUMMARY

The present disclosure discloses a formed glass panel, which can avoid a bending tendency of the glass opposite to an arc depth direction during the manufacturing process and solves a technical problem of poor optical refractive properties.

In a first aspect, a formed glass panel is provided in the disclosure. The formed glass panel has a first curvature in a first direction and a second curvature in a second direction, and the first direction and the second direction are perpendicular to each other. The formed glass panel has first support positions located at edge bending portions and second support positions located between two adjacent edge bending portions. The second support positions start forming prior to the first support positions. The formed glass panel has an arc depth per meter *d* in the first direction satisfying 30mm/m≤*d*≤80mm/m. The formed glass panel has an arc depth per meter *D* in the second direction satisfying 25mm/m≤*D*≤60mm/m.

Optionally, the formed glass panel has a first smoothness in the first direction of less than or equal to 30°, and a second smoothness in the second direction of less than or equal to 30°.

Optionally, when the arc depth per meter of the formed glass panel in the second direction satisfies 25mm/m≤*D*<40mm/m, the arc depth per meter *d* of the formed glass panel in the first direction and the arc depth per meter *D* of the formed glass panel in the second direction satisfy 0.3≤*D*/*d*≤1.4. Alternatively, when the arc depth per meter of the formed glass panel in the second direction satisfies 40mm/m≤*D*≤60mm/m, the arc depth per meter *d* of the formed glass panel in the first direction and the arc depth per meter *D* of the formed glass panel in the second direction satisfy 0.5≤*D*/*d*≤2.

Optionally, a length of the formed glass panel in the first direction is greater than a length of the formed glass panel in the second direction.

Optionally, the second curvature is greater than the first curvature.

In a second aspect, a glass panel forming method is provided in the disclosure. The method includes the follows. Provide a glass panel and heat the glass panel to a forming temperature, where the glass panel has first support positions located at edge bending portions and second support positions located between two adjacent edge bending portions. Place the glass panel heated to the forming temperature between an upper forming mold and a lower forming mold. Use the lower forming mold to support the second support positions first and press the second support positions in cooperation with the upper forming mold, and after a preset duration, use the lower forming mold to further support the first support positions and press both the first support positions and the second support positions in cooperation with the upper forming mold. Obtain a formed glass panel.

Optionally, the preset duration is 0.1s to 0.6s.

Optionally, a total pressing time of the lower forming mold and the lower forming mold on the glass panel is 1s to 6s.

In a third aspect, a glass panel forming apparatus is provided in the disclosure. The glass panel forming apparatus includes an upper forming mold and a lower forming mold, the upper forming mold and the lower forming mold are disposed opposite to each other, the lower forming mold is configured to support at least an edge of a glass panel, the lower forming mold includes a first support structure configured to support edge bending portions of the glass panel, and a second support structure configured to support a part of the glass panel between two adjacent edge bending portions, and the first support structure and the second support structure are movable relative to each other.

Optionally, the lower forming mold further includes a carrier, and the carrier is integrally formed with the first support structure or the second support structure.

Optionally, the lower forming mold has a first side, a second side, a third side, and a fourth side, the first side has one end connected to the second side in a bent manner and another end connected to the fourth side in a bent manner, the third side has one end connected to the second side in a bent manner and another end connected to the fourth side in a bent manner, and the first side and the third side are disposed opposite each other; the second support structure is located in the middle of each of the first side, the second side, the third side, and the fourth side, and extends to both sides, the first support structure is located on both sides of each of the first side, the second side, the third side, and the fourth side.

Optionally, the glass panel forming apparatus further includes a control component. The control component is connected to the first support structure and the second support structure respectively, and is configured to control the first support structure and the second support structure to press against the upper forming mold at different moments respectively.

Optionally, the control component is configured to control the second support structure to press against the upper forming mold, and control, after a preset duration, the first support structure to press against the upper forming mold.

Optionally, the glass panel forming apparatus further includes a processing chamber, the processing chamber includes a forming section, a heating section, and a transmission section, the upper forming mold and the lower forming mold are disposed on opposite sides in the forming section, the heating section is disposed before the forming section, and the transmission section is disposed after the forming section. The glass panel forming apparatus further includes a heating component, a transmission component, and a cooling component. The heating component and the transmission component are disposed in the heating section, the heating component is configured to heat the glass panel, and the transmission component is configured to transfer the glass panel from the heating section to the forming section. The cooling component is disposed in the forming section and configured to cool the formed glass panel, where the transmission component is also disposed in the transmission section and configured to transmit the cooled formed glass panel.

In a fourth aspect, a vehicle is provided in the disclosure. The vehicle includes a frame and the formed glass panel in the first aspect. The frame is configured to carry the formed glass panel.

### BRIEF DESCRIPTION OF THE DRAWINGS

To more clearly illustrate technical solutions in embodiments of the present disclosure, accompany drawings required in the embodiments will be briefly introduced below. Obviously, the accompany drawings described below are merely some embodiments of the present disclosure. For those of ordinary skill in the art, other drawings can be obtained from these drawings without creative effort.
FIG. 1 is a top view of a formed glass panel provided in an embodiment of the present disclosure.
FIG. 2 is a schematic diagram of formed wrinkles of a glass panel in a simulation model provided in an embodiment of the present disclosure.
FIG. 3 is a schematic flowchart of a glass panel forming method provided in an embodiment of the present disclosure.
FIG. 4 is a top view of a glass panel provided in an embodiment of the present disclosure.
FIG. 5 is a schematic structural diagram of a glass panel forming apparatus provided in an embodiment of the present disclosure.
FIG. 6 is a top view of a lower forming mold provided in an embodiment of the present disclosure.
FIG. 7 is a schematic structural diagram of a glass panel forming apparatus according to another embodiment of the present disclosure.
FIG. 8 is a top view of a vehicle provided in an embodiment of the present disclosure.
FIG. 9 is a schematic diagram of first and second reflective fringe lines projected onto a surface of the formed glass panel provided in the present disclosure.
FIG. 10 is a schematic diagram of a first smoothness acquisition method according to the present disclosure.

Description of reference signs: first direction - D1, second direction - D2, formed glass panel - 1, glass panel forming apparatus - 2, processing chamber - 21, forming section - 211, heating section - 212, transmission section - 213, upper forming mold - 22, lower forming mold - 23, carrier - 231, first support structure - 232, second support structure - 233, first side - 234, second side - 235, third side - 236, fourth side - 237, control component - 24, heating component - 25, transmission component - 26, cooling component - 27, glass panel - 3, first support position - 31, second support position - 32, vehicle - 4, frame - 41.

### DETAILED DESCRIPTION

Technical solutions in embodiments of the present disclosure will be clearly and completely described below with reference to accompanying drawings. Obviously, the described embodiments are merely a part of embodiments of the present disclosure, and not all of the embodiments. Based on the embodiments in the present disclosure, all other embodiments obtained by those of ordinary skill in the art without creative effort are within the scope of protection of the present disclosure.

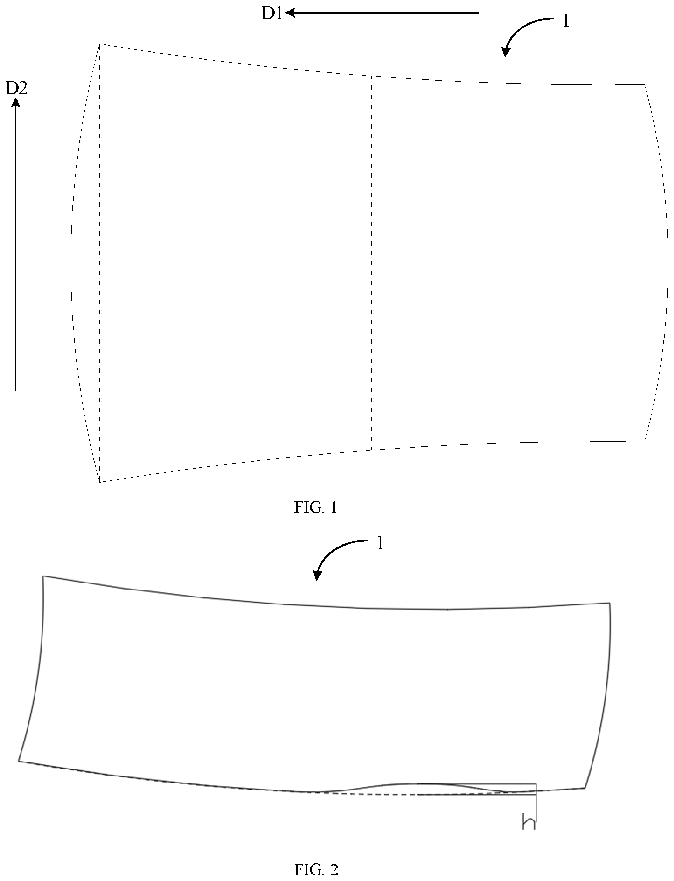

The present disclosure provides a formed glass panel 1. Reference is made to FIG. 1, which is a top view of a formed glass panel provided in an embodiment of the present disclosure. The formed glass panel 1 has a first curvature in a first direction D1 and a second curvature in a second direction D2, where the first direction D1 and the second direction D2 are perpendicular to each other.

In some embodiments, the first curvature and the second curvature cause the formed glass panel 1 to substantially form a spherical surface. In some specific embodiments, the first direction D1 of the formed glass panel 1 can be a length direction of the glass panel, i.e., a longitudinal direction; and the second direction D2 can be a width direction of the glass panel, i.e., a transverse direction. The first curvature is obtained by measuring two edges of the formed glass panel in a direction parallel or substantially parallel to the first direction D1. If curvatures of the two edges are not the same, the larger curvature is taken as the first curvature in the first direction D1. The second curvature is obtained by measuring two edges of the formed glass panel in a direction parallel or substantially parallel to the second direction D2. If curvatures of the two edges are not the same, the larger curvature is taken as the second curvature in the second direction D2. The first curvature refers to a curvature of an arc located at an edge position in the first direction D1 of the formed glass panel 1. In some embodiments, when the arc located at the edge position in the first direction D1 of the formed glass panel 1 has multiple curvatures, the first curvature can be an average curvature of the arc. The second curvature refers to a curvature of an arc located at an edge position in the second direction D2 of the formed glass panel 1. In some embodiments, when the arc located at the edge position in the second direction D2 of the formed glass panel 1 has multiple curvatures, the second curvature can be an average curvature of the arc.

The formed glass panel 1 includes first support positions located at edge bending portions and second support positions located between two adjacent edge bending portions, where the second support position start forming prior to the first support positions.

In some embodiments, the formed glass panel has a first smoothness in the first direction of less than or equal to 30°; in some further embodiments, the first smoothness is less than or equal to 25°; in some preferred embodiments, the first smoothness is less than or equal to 20°; in some other embodiments, the first smoothness may be less than or equal to 10°, less than or equal to 5°, or less than or equal to 3°.

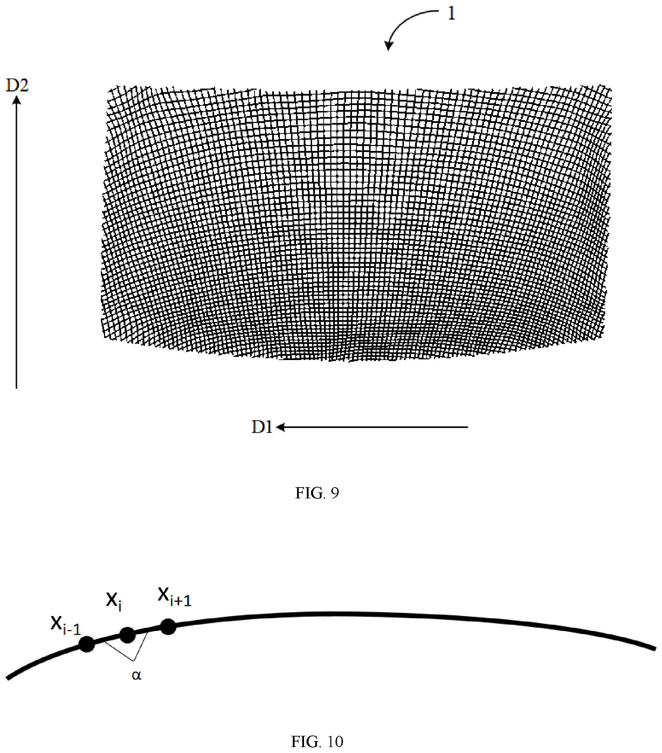

As illustrated in FIG. 9 and FIG.10, the first smoothness is defined as follows. Several first reflective fringe lines extending substantially in the first direction are projected onto a surface of the formed glass panel. As illustrated in FIG. 10, any point Xi is selected on a first reflective fringe line, two adjacent points Xi-1 and Xi+1 before and after point Xi are taken on the same first reflective fringe line, an included angle α between line segment XiXi-1 and line segment XiXi+1 is calculated, and a supplementary angle of the included angle α is taken as a first smoothness at point Xi.

As illustrated in FIG. 9, due to the curvature of the surface of the formed glass panel, the first reflective ripple lines observed on the surface of the formed glass panel will appear curved. Ideally, when the first reflective ripple line is divided with a small distance span, the included angle α between adjacent line segments will approach 180°. In other words, the supplementary angle of the included angle α will approach 0. However, in reality, due to the curvature of the formed glass panel itself and the lengths of the selected line segments XiXi-1 and XiXi+1, it is reasonable for the first smoothness of the formed glass panel (i.e., the supplementary angle of the included angle α) to be less than 20°. The lengths of line segments XiXi-1 and XiXi+1 are related to the size of the grid formed by the first and second reflective fringe lines. Generally, the lengths of line segments XiXi-1 and XiXi+1 are each between 1 and 15 mm. In the present disclosure, the lengths of line segments XiXi-1 and XiXi+1 each can be 1, 2, 4, 5, 7, 8, 10, 12, or 15 mm.

However, in some embodiments, the formed glass panel may be affected by the forming process in a local region, resulting in local unevenness (especially in an edge region of the formed glass panel). This causes the included angle α between adjacent line segments of the first reflective ripple line in the local region to decrease, and the supplementary angle of the included angle α to increase. This increase in the supplementary angle is difficult to observe with the naked eye due to the transparency of the glass itself. However, through repeated verification, it was found that when the first smoothness of the first reflective ripple line at any point Xi (i.e., the supplementary angle of the included angle α) is greater than 30°, the surface of the formed glass panel will exhibit poor refraction, that is, the reflected light on the surface of the formed glass panel will be significantly distorted. Therefore, the first smoothness of the formed glass panel in the first direction being less than or equal to 30° can enable the formed glass panel to have relatively good refraction performance in the first direction.

In some embodiments, the formed glass panel has a second smoothness in the second direction of less than or equal to 30°; in some further embodiments, the second smoothness is less than or equal to 25°; in some preferred embodiments, the second smoothness is less than or equal to 20°; in some other embodiments, the second smoothness may be less than or equal to 10°, less than or equal to 5°, or less than or equal to 3°.

As illustrated in FIG. 9, the second smoothness is defined as follows. Several first reflective fringe lines extending substantially in the second direction are projected onto the surface of the formed glass panel. Any point Yi is selected on a first reflective fringe line, two adjacent points Yi-1 and Yi+1 before and after point Yi are taken on the same first reflective fringe line, an included angle α between line segment YiYi-1 and line segment YiYi+1 is calculated, and a supplementary angle of the included angle α is taken as a second smoothness at point Yi.

As illustrated in FIG. 9, due to the curvature of the surface of the formed glass panel, the second reflective ripple line observed on the surface of the formed glass panel will appear curved. Ideally, when the second reflective ripple line is divided with a small distance span, the included angle β between adjacent line segments will approach 180°. In other words, the supplementary angle of the included angle β will approach 0. However, in reality, due to the curvature of the formed glass panel itself and the lengths of the selected line segments YiYi-1 and YiYi+1, it is reasonable for the second smoothness of the formed glass panel (i.e., the supplementary angle of the included angle β) to be less than 20°. The lengths of line segments YiYi-1 and YiYi+1 are related to the size of the grid formed by the first and second reflective fringe lines. Generally, the lengths of line segments YiYi-1 and YiYi+1 are each between 1 and 15 mm. In the present disclosure, the lengths of line segments YiYi-1 and YiYi+1 each can be 1, 2, 4, 5, 7, 8, 10, 12, or 15 mm.

However, in some embodiments, the formed glass panel may be affected by the forming process in the local region, resulting in local unevenness (especially in an edge region of the formed glass panel). This causes the included angle β between adjacent line segments of the second reflective ripple line in the local region to decrease, and the supplementary angle of the included angle β to increase. This increase in the supplementary angle is difficult to observe with the naked eye due to the transparency of the glass itself. However, through repeated verification, it was found that when the second smoothness of the second reflection ripple line at any point Yi (i.e., the supplementary angle of the included angle β) is greater than 30°, the surface of the formed glass panel will exhibit poor refraction, that is, the reflected light on the surface of the formed glass panel will be greatly distorted. Therefore, the second smoothness of the formed glass panel in the second direction being less than or equal to 30° can enable the formed glass panel to have relatively good refraction performance in the second direction.

A distance between a projection background for forming the first and second reflective ripple lines and a center point of the formed glass panel can be selected as 1400mm, a spacing between adjacent first reflective ripple lines in the projection background can be selected as 30mm, and a spacing between adjacent second reflective ripple lines can be selected as 30mm.

Furthermore, by constructing a simulation model of the formed glass panel, the impact of the increase in the first or second smoothness can be represented more intuitively. For example, formed wrinkles in the first direction D1 or the second direction D2 in the simulation model can represent a bending tendency opposite to the arc depth direction that appears during the forming process.

During the forming process, the glass panel is affected by the first curvature and the second curvature. If the first support positions and the second support positions start forming at the same time, the glass panel will be squeezed inward in the local region at an edge of the glass panel, and has a bending tendency opposite to the arc depth direction during the forming process. In the simulation model, this bending tendency that appears during the forming process can be represented by local formed wrinkles. As illustrated in FIG. 2, a dashed part represents an edge shape when there are no formed wrinkles at the edge of the glass panel, and a solid part represents the edge shape with the existence of the formed wrinkles at the edge of the glass panel in the simulation model. *h* represents the height of the formed wrinkle at this position. Formed wrinkles will appear in both the first direction D1 and the second direction D2.

In actual formed glass panels, due to the pressure of the upper and lower molds during the forming process, this local bending cannot be directly observed. However, a certain degree of optical distortion will appear at the edge of the formed glass panel. Theoretically, a greater local bending tendency will lead to a more severe optical distortion at the edge of the formed glass panel. Generally speaking, when the height of the formed wrinkle obtained in the simulation model is greater than 8mm, the optical distortion at the edge of the actual formed glass panel is unacceptable.

In the present disclosure, the second support positions start forming prior to the first support positions. During the bending process of the second support positions, the bending tendency at the second support positions will tend to transition toward the first support positions. Since the first support positions are at bending portions of the formed glass panel, the bending tendency will decrease or become smaller, which is reflected in the simulation model in the reduction of the height *h* of the formed wrinkle. For the actual formed glass panel, this means that the degree of optical distortion at the edge is reduced or even disappears.

An arc depth per meter *d* of the formed glass panel in the first direction satisfies 30mm/m≤*d*≤80mm/m. In some specific embodiments, the arc depth per meter *d* of the formed glass panel in the first direction refers to an arc depth per meter obtained by measuring the two edges of the formed glass panel in a direction parallel or substantially parallel to the first direction D1. If arc depths per meter of the two edges are not the same, the larger arc depth per meter is taken as the arc depth per meter *d* in the first direction. In some further embodiments, the arc depth per meter *d* of the formed glass panel in the first direction can be classified according to its arc depth range. For example, when the arc depth per meter *d* of the formed glass panel in the first direction satisfies 30≤*d*≤55, the height of the formed wrinkle *h* in the first direction in the simulation model is ≤2; when the arc depth per meter *d* of the formed glass panel in the first direction satisfies 55<*d*≤60, the height of the formed wrinkle *h* in the first direction in the simulation model is ≤3; and when the arc depth per meter *d* of the formed glass panel in the first direction satisfies 60<*d*≤80, the height of the formed wrinkle *h* in the first direction in the simulation model is ≤5.

The arc depth per meter *D* of the formed glass panel in the second direction satisfies 25mm/m≤*D*≤60mm/m. In some specific embodiments, the arc depth per meter *D* of the formed glass panel in the second direction refers to an arc depth per meter obtained by measuring the two edges of the formed glass panel in a direction parallel or substantially parallel to the second direction D2. If arc depths per meter of the two edges are not the same, the larger arc depth per meter is taken as the arc depth per meter *D* in the second direction. In some further embodiments, the arc depth per meter *D* of the formed glass panel in the second direction can be classified according to its arc depth range. For example, when the arc depth per meter *D* of the formed glass panel in the second direction satisfies 25≤*D*≤30, the height of the formed wrinkle *h* in the second direction in the simulation model is ≤2; when the arc depth per meter *D* of the formed glass panel in the second direction satisfies 30<*d*≤40, the height of the formed wrinkle *h* in the second direction in the simulation model is ≤3; when the arc depth per meter *D* of the formed glass panel in the second direction satisfies 40<*d*≤60, the height of the formed wrinkle *h* in the second direction in the simulation model is ≤5.

In some embodiments, when the arc depth per meter of the formed glass panel in the second direction satisfies 25mm/m≤*D*<40mm/m, the arc depth per meter *d* of the formed glass panel in the first direction and the arc depth per meter *D* of the formed glass panel in the second direction satisfy 0.3≤*D*/*d*≤1.4.

Alternatively, when the arc depth per meter of the formed glass panel in the second direction satisfies 40mm/m≤*D*≤60mm/m, the arc depth per meter *d* of the formed glass panel in the first direction and the arc depth per meter *D* of the formed glass panel in the second direction satisfy 0.5≤*D*/*d*≤2.

When the arc depth per meter of the formed glass panel in the second direction satisfies 25mm/m≤*D*<40mm/m, in some embodiments, the second curvature is greater than the first curvature. Therefore, at the position of the second curvature, the edge of the formed glass panel is already likely to have optical distortion. To avoid excessive optical distortion in the first direction, which would make the overall optical condition of the formed glass panel unacceptable, it is better for the arc depth per meter *d* in the first direction and the arc depth per meter *D* in the second direction to satisfy 0.3≤*D*/*d*≤1.4. When the arc depth per meter of the formed glass panel in the second direction satisfies 40mm/m≤*D*≤60mm/m, in some embodiments, the second curvature is greater than the first curvature. Therefore, at the position of the second curvature, the edge of the formed glass panel is already likely to have optical distortion. To avoid excessive optical distortion in the first direction, which would make the overall optical condition of the formed glass panel unacceptable, it is better for the arc depth per meter *d* in the first direction and the arc depth per meter *D* in the second direction to satisfy 0.5≤*D*/*d*≤2.

In some embodiments, the length of the formed glass panel in the first direction D1 is greater than the length of the formed glass panel in the second direction D2. In some specific embodiments, the length of the formed glass panel in the first direction D1 can specifically refer to the maximum length of the formed glass panel in the first direction D1, or it can refer to the length of a chord corresponding to an arc at an edge where the arc depth per meter *d* in the first direction is determined. Specifically, the length in the first direction D1 can be 400mm to 2000mm. In some specific embodiments, the length in the first direction D1 can be 400mm, 500mm, 600mm, 700mm, 800mm, 900mm, 1000mm, 1300mm, 1500mm, 1800mm, 2000mm, etc., and a range of the length in the first direction D1 can also fall within a range formed by any two of the above length values.

The length of the formed glass panel in the second direction D2 can specifically refer to the maximum length of the formed glass panel in the second direction D2, or it can refer to the length of a chord corresponding to an arc at an edge where the arc depth per meter *D* in the second direction is determined. Specifically, the length in the second direction D2 can be 400mm to 1400mm. In some specific embodiments, the length in the second direction D2 can be 400mm, 500mm, 600mm, 700mm, 800mm, 900mm, 1000mm, 1100mm, 1200mm, 1300mm, 1400mm, etc., and a range of the length in the second direction D2 can also fall within the range formed by any two of the above length values.

In some embodiments, the second curvature is greater than the first curvature. The second curvature can be in a range from 400/m to 3000/m. In some specific embodiments, the second curvature can be 400/m, 500/m, 600/m, 700/m, 800/m, 900/m, 1000/m, 1300/m, 1500/m, 1800/m, 2000/m, 2200/m, 2400/m, 2600/m, 2800/m, or 3000/m. Furthermore, the second curvature can also fall within a range formed by any two of the above curvature values. The first curvature can be in a range of 400/m~3000/m. In some specific embodiments, the first curvature can specifically be 400/m, 500/m, 600/m, 700/m, 800/m, 900/m, 1000/m, 1300/m, 1500/m, 1800/m, 2000/m, 2200/m, 2400/m, 2600/m, 2800/m, or 3000/m. Furthermore, the first curvature can also fall within a range formed by any two of the above curvature values.

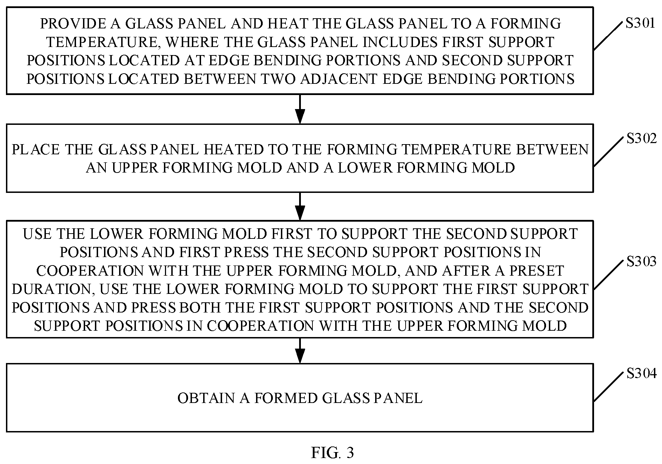

The present disclosure also provides a glass panel forming method. Reference is made to FIG. 3, which is a schematic flowchart of a glass panel forming method provided in an embodiment of the present disclosure. The glass panel forming method includes operations at S301, S302, S303, and S304, where the detailed descriptions of operations at S301, S302, S303, and S304 are as follows.

At S301, provide a glass panel and heat the glass panel to a forming temperature, where the glass panel includes first support positions located at edge bending portions and second support positions located between two adjacent edge bending portions.

At S302, place the glass panel heated to the forming temperature between an upper forming mold and a lower forming mold.

At S303, use the lower forming mold first to support the second support positions and first press the second support positions in cooperation with the upper forming mold, and after a preset duration, use the lower forming mold to further support the first support positions and press both the first support positions and the second support positions in cooperation with the upper forming mold.

S304, obtain a formed glass panel.

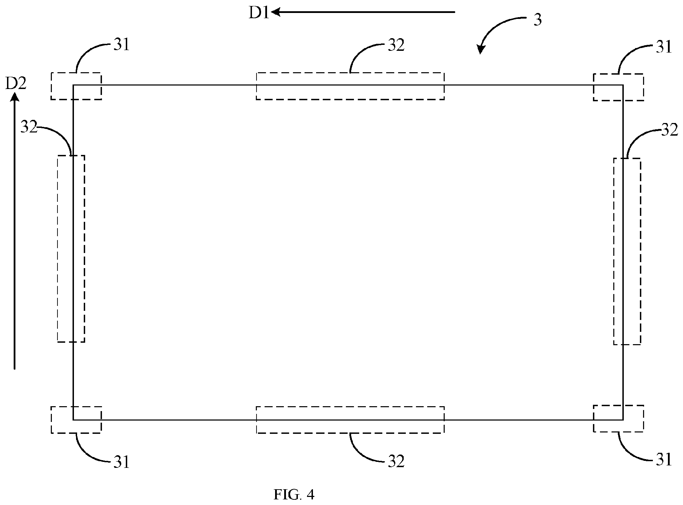

Specifically, reference is made to FIG. 4, which is a top view of a glass panel provided in an embodiment of the present disclosure. Typically, the glass panel 3 has a roughly rectangular outline and four edge bending portions, the first support positions 31, and the second support positions 32. It can be noted that to give the formed glass panel 1 a certain curvature to suit different application scenarios, an unformed glass panel 3 needs to be heated first to increase its plasticity, and then pressed to change its shape, so as to form a formed glass panel 1. It is understandable that the required shape of the glass panel 3 will vary depending on the application scenario. For example, glass used in vehicles mainly includes windshields, rear windshields, sunroofs, and side windows. Windshields are usually heat-strengthened glass, which is thin, has low strength, and low surface stress; while rear windshields, side windows, and sunroofs mostly use tempered glass, which is thick, has high strength, and high surface stress.

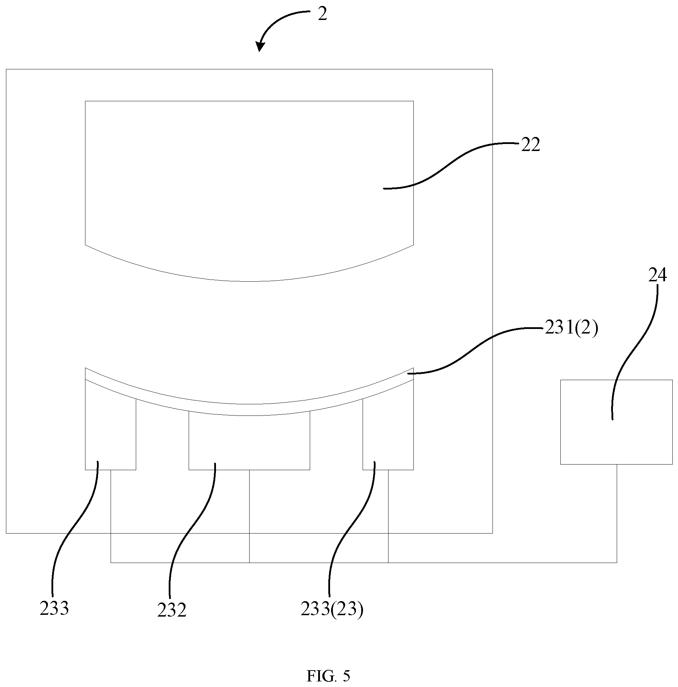

It can be noted in the present disclosure, a glass panel forming apparatus 2 is used to manufacture the formed glass panel 1 using the glass panel forming method. The present disclosure provides a glass panel forming apparatus 2. Reference is made to FIG. 5, which is a schematic structural diagram of the glass panel forming apparatus provided in an embodiment of the present disclosure. The glass panel forming apparatus 2 includes an upper forming mold 22 and a lower forming mold 23. The upper forming mold 22 and the lower forming mold 23 are disposed opposite to each other. The lower forming mold 23 is configured to support for at least an edge of the glass panel 3. The lower forming mold 23 includes a first support structure 232 configured to support edge bending portions of the glass panel 3, and a second support structure 233 configured to support a part of the glass panel 3 between two adjacent edge bending portions. The first support structure 232 and the second support structure 233 are movable relative to each other.

It may be noted that The first support structure 232 and the second support structure 233 being movable relative to each other means that the first support structure 232 and the second support structure 233 are not integrally formed, so that the movement of the first support structure 232 and the movement of the second support structure 233 are not linked, thereby enabling the first support structure 232 and the second support structure 233 to press the upper forming mold 22 at different moments. In this embodiment, the first support structure 232 and the upper forming mold 22 press together first support positions 31 of the glass panel 3, and the second support structure 233 and the upper forming mold 22 press together second support positions 32 of the glass panel 3.

During the pressing process of the glass panel 3, the height of the formed wrinkles may vary due to the different curvatures of the formed glass panel 3. Reference is made to FIG. 4 again. After forming, the glass panel 3 needs to have a longitudinal arc depth in the first direction D1, and the glass panel 3 needs to have a transverse arc depth in the second direction D2. The first direction D1 may be, but is not limited to, the same as a direction of vehicle travel, and the second direction D2 may be, but is not limited to, perpendicular to the first direction D1. It may be noted that in this embodiment, the formed glass panel 1 is transported in the glass panel forming apparatus 2 in the second direction D2.

During the pressing process of the glass panel 3, since a middle part of the lower forming mold 23 contacts the upper forming mold 22 first, when the arc depth of a surface of the glass panel 3 adjacent to the upper forming mold 22 is large, corner parts of the glass panel 3 at the periphery are higher. After the lower forming mold 23 and the upper forming mold 22 are pressed together, the corner parts of the glass panel 3 at the periphery contact the upper forming mold 22 first compared with a middle part of the glass panel 3. The bending tendency between the two parts is opposite to the arc depth direction, which results in distortion of refracted light at the formed glass panel 1 after the upper forming mold 22 and the lower forming mold 23 are pressed together.

By constructing a simulation model in a computer device, the aforementioned bending tendency opposite to the arc depth direction can be represented by wrinkles at the edge of the glass panel in the simulation model. When a glass panel forming apparatus from related technologies is used to form the glass panel at the first and second support positions simultaneously, relevant simulation data shown in Table 1 are obtained. When the transverse arc depth per meter of the formed glass panel 1 in the simulation model exceeds 25 mm/m and the longitudinal arc depth per meter exceeds 50 mm/m, formed wrinkles will exceed 8 mm. Corresponding to actual formed glass panel, this results in poor smoothness of the formed glass panel at the edge, and the optical distortion is unacceptable. Therefore, when the glass panel forming apparatus from related technologies is used to process and manufacture sunroof glass for vehicles, the transverse arc depth per meter mostly exceeds 35 mm/m and the longitudinal arc depth per meter mostly exceeds 50 mm/m, and optical refractive properties of the resulting formed glass panel 1 are difficult to meet the requirements.

**Table 1 Simulation data of the formed glass panel obtained using related technologies**

| transverse arc depth per meter *D* (mm/m) of formed glass panel | formed wrinkle height *h* (mm) of formed glass panel in transverse direction |
|---|---|
| 30<*D*≤40 | 5<*H* |
| 40<*D* | 8<*H* |

| longitudinal arc depth per meter *d* (mm/m) of formed glass panel | formed wrinkle height *h* (mm) of formed glass panel in longitudinal direction |
|---|---|
| 55<*d*≤60 | 5<*h* |
| 60<*d* | 8<*h* |

As can be seen from the experimental data in Table 1 above, when the transverse arc depth per meter and the longitudinal arc depth per meter of the simulation model of the glass panel are relatively large, the height of the formed wrinkle in the transverse direction and the height of the formed wrinkle in the longitudinal direction of the simulation model are also relatively large.

Specifically, in one possible embodiment, reference is made to FIG. 5 again, the glass panel forming apparatus 2 further includes a control component 24. The control component 24 is connected to the first support structure 232 and the second support structure 233 respectively, and is configured to control the first support structure 232 and the second support structure 233 to press against the upper forming mold 22 at different moments respectively. The control component 24 may include a control unit and multiple cylinders. The multiple cylinders are respectively connected to the second support structure 233 and the first support structure 232. Under the control of the control unit, the multiple cylinders are operated at different moments, enabling the second support structure 233 and the first support structure 232 to press against the upper forming mold 22 at different moments. This allows the bending tendency opposite to the arc depth direction formed during the forming process of the formed glass panel 1 to extend from the second support positions to the first support positions, thereby reducing or eliminating the original bending tendency and improving the optical performance of the formed glass panel 1. This allows for a wider range of design possibilities for the formed glass panel 1.

It is understood that in this embodiment, by controlling the second support structure 233 and the first support structure 232 to press against the upper forming mold 22 at different moments through the control component 24, the bending tendency opposite to the arc depth direction generated during the forming process of the glass panel 3 can be extended within a time difference between the pressing of the second support structure 233 and the first support structure 232 against the upper forming mold 22, thereby improving the optical refractive performance of the formed glass panel 1.

It is understood that in other possible embodiments, the control component 24 may not be used to control the second support structure 233 and the first support structure 232 to press against the upper forming mold 22 at different moments. For example, manual operation can be used to control the second support structure 233 and the first support structure 232 to press against the upper forming mold 22 at different moments, which is not limited in the present disclosure.

In this embodiment, the preset duration may range from 0.1s to 0.6s. It may be noted that, in order to ensure production efficiency, a total pressing duration of the upper forming mold 22 and the lower forming mold 23, that is, a duration during which the glass panel 3 is pressed, may generally not be too long. Under normal circumstances, the total pressing time of the lower forming mold and the lower forming mold on the glass panel is 1s~6s, which is not limited in the present disclosure. For example, when the control component 24 controls the lower forming mold 23 and the upper forming mold 22 to press for 5 seconds, the control component 24 controls the lower forming mold 23 and the upper forming mold 22 to press for a relatively long time. In this case, in order to ensure that the bending tendency of the glass panel 3 generated during the pressing process, which is opposite to the arc depth direction, transitions and extends to corners of the glass panel 3 at the peripheral, the preset duration is to be relatively short, which may range from 0.2s to 0.3s. When the control component 24 controls the lower forming mold 23 and the upper forming mold 22 to press for 1 second, the control component 24 controls the lower forming mold 23 and the upper forming mold 22 to press for a relatively short time, and the preset duration may range from 0.3s to 0.5s.

It is understood that in other possible embodiments, the preset duration can also be other values, as long as it does not affect the control component 24 controlling the second support structure 233 to press against the upper forming mold 22 and the control component 24 controlling the first support structure 232 to press against the upper forming mold 22 after the preset duration, which is not limited in the present disclosure.

In one possible embodiment, the transverse arc depth per meter of the formed glass panel 1 is less than or equal to 60mm/m, and the longitudinal arc depth per meter of the formed glass panel 1 is less than or equal to 80mm/m.

By constructing a simulation model in a computer device, the aforementioned bending tendency opposite to the arc depth direction can be represented by the wrinkles at the edge of the glass panel in the simulation model. When the glass panel forming apparatus 2 provided in the present disclosure is used to process the glass panel 3, the second support positions of the glass panel start forming prior to the first support positions, relevant simulation data shown in Table 2 below are obtained. When the transverse arc depth per meter of the formed glass panel 1 in the simulation model is less than or equal to 40 mm/m, or the longitudinal arc depth per meter of the formed glass panel 1 in the simulation model is less than or equal to 60 mm/m, the formed wrinkle height in the transverse direction and the formed wrinkle height in the longitudinal direction of the formed glass panel 1 in the simulation model are both less than 3 mm. Compared to related technologies, the curvature of the formed glass panel 1 can be greater, so that a formed glass panel 1 with a larger curvature can be manufactured, generation of formed wrinkles can be reduced or the height of the generated formed wrinkles can be lowered, and the optical refractive properties of the formed glass panel 1 can be improved.

**Table 2 Simulation data of the formed glass panel obtained using the technical solution of the present disclosure**

| transverse arc depth per meter *D* (mm/m) of formed glass panel | formed wrinkle height *h* (mm) of formed glass panel in transverse direction |
|---|---|
| 25≤*D*≤30 | *H*<2 |
| 30<*D*≤40 | *H*<3 |
| 40<*D* | *H*<5 |

| longitudinal arc depth per meter *d* (mm/m) of formed glass panel | formed wrinkle height *h* (mm) of formed glass panel in longitudinal direction |
|---|---|
| 50≤*d*≤55 | *h*<2 |
| 55<*d*≤60 | *h*<3 |
| 60<*d* | *h*<5 |

As can be seen from the experimental data in Table 2 above, when the transverse arc depth per meter of the formed glass panel 1 in the simulation model is greater than 40 mm/m and the longitudinal arc depth per meter of the formed glass panel 1 in the simulation model is greater than 60 mm/m, both the height of the formed wrinkle in the transverse direction and the height of the formed wrinkle in the longitudinal direction of the formed glass panel 1 in the simulation model are still less than 5 mm.

Furthermore, in one possible embodiment, the transverse arc depth per meter of the formed glass panel 1 is greater than or equal to 25 mm/m, and the longitudinal arc depth per meter of the formed glass panel 1 is less than or equal to 50 mm/m. As can be seen from the experimental data in Table 2 above, when the transverse arc depth per meter of the formed glass panel 1 is greater than or equal to 25 mm/m, and the longitudinal arc depth per meter of the formed glass panel 1 is less than or equal to 50 mm/m, both the height of the formed wrinkle in the transverse direction and the height of the formed wrinkle in the longitudinal direction of the formed glass panel 1 in the simulation model are still less than 5 mm.

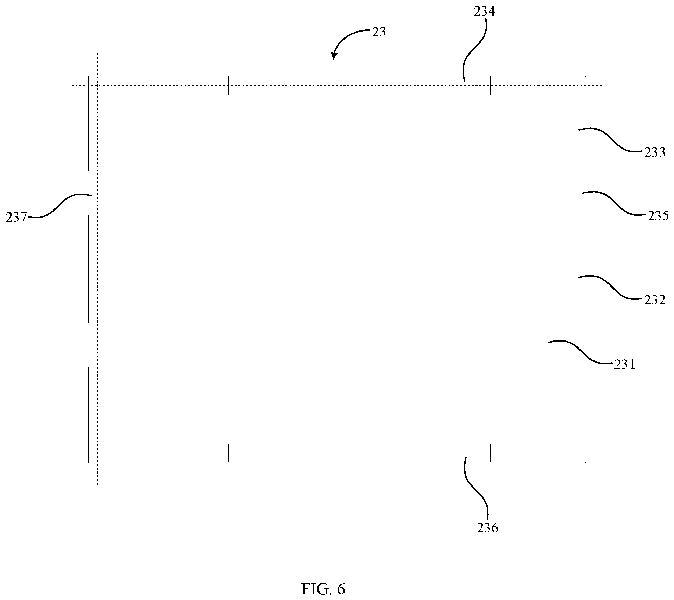

In one possible embodiment, reference is made to FIG. 6 as well, which is a top view of the lower forming mold provided in an embodiment of the present disclosure. The lower forming mold 23 also includes a carrier 231, and carrier 231 is integrally formed with the first support structure 232 or the second support structure 233.

Specifically, as illustrated in FIG. 6, the second support structure 233 and the first support structure 232 are spaced apart. In other words, there is a certain gap between the second support structure 233 and the first support structure 232, so that the first and second support structures 233 and the first support structure 232 are movable relative to each other, thereby providing extending space for the bending tendency opposite to the arc depth direction during the forming process of the glass panel 3. The carrier 231 is configured to support the glass panel 3. The carrier 231 is integrally formed with the first support structure 232 or the second support structure 233 so that when the carrier 231 moves toward the upper forming mold 22, the carrier 231 drives the first support structure 232 or the second support structure 233 to move toward the upper forming mold 22 together and press the glass panel 3, without affecting the relative movement of the first support structure 232 and the second support structure 233.

For example, when the control component 24 controls the second support structure 233 to press against the upper forming mold 22 first, the glass panel 3 is pressed by the second support structure 233 and the upper forming mold 22, causing the bending tendency of the glass panel 3 opposite to the arc depth direction to be squeezed along the second support structure 233 to both sides of the second support structure 233. That is, the bending tendency opposite to the arc depth direction is temporarily located between the second support structure 233 and the first support structure 232. Afterwards, when the control component 24 controls the first support structure 232 to press against the upper forming mold 22, the bending tendency opposite to the arc depth direction located between the second support structure 233 and the first support structure 232 can be extended, thereby reducing or even eliminating the bending tendency opposite to the arc depth direction and improving the optical refractive properties of the formed glass panel 1. An implementation of the control component 24 controlling the first support structure 232 to press against the upper forming mold 22 first and then controlling the second support structure 233 to press against the upper forming mold 22 is the same as the above, and will not be described again in the present disclosure.

Furthermore, it may be noted that, since the glass panel 3 will bend and deform under its own weight after heating, when the glass panel 3 is placed on the carrier 231, a periphery part of a side adjacent to the upper forming mold 22 is usually closer to the upper forming mold 22 than the middle part. Therefore, during the pressing process of the glass panel 3, a portion that is prone to bending in an opposite direction of the arc depth direction is located at the periphery of the glass panel 3. Therefore, in this embodiment, the second support structure 233 and the first support structure 232 are arranged to surround the carrier 231, that is, the second support structure 233 and the first support structure 232 are respectively arranged at the periphery of the glass panel 3 that is prone to bending in the opposite direction of the arc depth direction during the pressing process.

It can be understood that in other possible embodiments, the lower forming mold 23 may not include the carrier 231, that is, the lower forming mold 23 is hollow, and the first support structure 232 and the second support structure 233 are arranged at the periphery of the glass panel 3 and used to support the glass panel 3, which is not limited in the present disclosure.

In one possible embodiment, reference is made to FIG. 6 again, the lower forming mold 23 has a first side 234, a second side 235, a third side 236, and a fourth side 237. The first side 234 has one end connected to the second side 235 in a bent manner and another end connected to the fourth side 237 in a bent manner. The third side 236 has one end connected to the second side 235 in a bent manner and another end connected to the fourth side 237 in a bent manner. The first side 234 and the third side 236 are disposed opposite to each other. The second support structure 233 is disposed in the middle of each of the first side 234, the second side 235, the third side 236, and the fourth side 237, and extends to both sides. The first support structure 232 is disposed on both sides of each of the first side 234, the second side 235, the third side 236, and the fourth side 237.

It may be noted that, since the glass panel 3 will bend and deform under its own weight after heating, when the glass panel 3 is placed on the carrier 231, a part of the glass panel 3 adjacent the upper forming mold 22 corresponding to two sides of the first side 234 is closer to the upper forming mold 22 than a part of the glass panel 3 corresponding to the middle of the first side 234. During the pressing process of the glass panel 3, the parts corresponding to the two sides and the middle of the first side 234 are more likely to exhibit a bending tendency opposite to the arc depth direction. Therefore, in this embodiment, the second support structure 233 is placed in the middle of the first side 234 and extends to both sides of the first side 234, and the first support structure 232 is placed on both sides of the first side 234, thereby improving the optical refractive properties of the formed glass panel 1. Similarly, in this embodiment, the second support structure 233 is disposed in the middle of each of the second side 235, the third side 236 and the fourth side 237, and extends to both sides respectively, and the first support structure 232 is disposed on both sides of each of the second side 235, the third side 236, and the fourth side 237 respectively.

Specifically, as illustrated in FIG. 6, the second support structure 233 disposed on each of the first side 234, the second side 235, the third side 236, and the fourth side 237 is a whole. The first support structure 232 disposed on both sides of the first side 234 is connected to the first support structure 232 disposed on one side of the second side 235 and the first support structure 232 disposed on one side of the fourth side 237 respectively. The first support structure 232 disposed on both sides of the third side 236 is connected to the first support structure 232 disposed on one side of the second side 235 and the first support structure 232 disposed on one side of the fourth side 237 respectively. This allows the bending tendency opposite to the arc depth direction to extend in a diagonal direction, thereby improving the optical refractive properties of the formed glass panel 1.

It is understood that in other possible embodiments, the second support structure 233 disposed on each of the first side 234, the second side 235, the third side 236, and the fourth side 237 may not be a whole, and the first support structure 232 disposed on each of the first side 234, the second side 235, the third side 236, and the fourth side 237 may not be connected, which is not limited in the present disclosure.

In one possible embodiment, the control component 24 is configured to control the second support structure 233 to press against the upper forming mold 22, and control, after a preset duration, the first support structure 232 to press against the upper forming mold 22.

Specifically, since multiple cylinders are respectively connected to the second support structure 233 and the first support structure 232, the control unit is configured to control the multiple cylinders to work at different moments, so that the second support structure 233 and the first support structure 232 press against the upper forming mold 22 at different moments.

It can be understood that since the glass panel 3 will bend and deform under the action of its own weight after heating, a periphery part of a side of the glass panel 3 adjacent to the upper forming mold 22 is usually closer to the upper forming mold 22 than the middle part. In this embodiment, the control component 24 controls the second support structure 233 to press against the upper forming mold 22 first, and after the preset duration, controls the first support structure 232 to press against the upper forming mold 22, which can effectively transition and extend the bending tendency opposite to the arc depth direction to the corners at the peripheral of the formed glass panel 1, thereby improving the optical refractive properties of the formed glass panel 1. In other possible embodiments, the formed glass panel 1 may also have other curvatures. In this case, the control component 24 may control the first support structure 232 to first press against the upper forming mold 22, and then control the second support structure 233 to press against the upper forming mold 22 after the preset duration, which is not limited in the present disclosure.

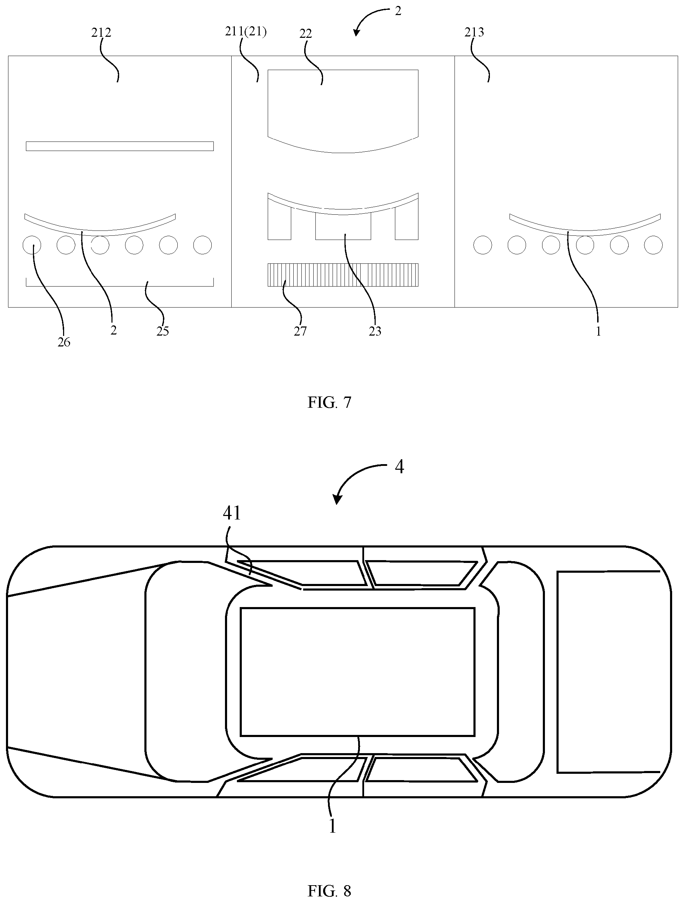

In one possible embodiment, reference is made to FIG. 7, which is a schematic structural diagram of a glass panel forming apparatus provided in another embodiment of the present disclosure. The glass panel forming apparatus 2 further includes a processing chamber 21, and the processing chamber 21 includes a forming section 211, a heating section 212, and a transmission section 213. The upper forming mold and the lower forming mold 23 are disposed on opposite sides in the forming section 211. The heating section 212 is disposed before the forming section 211, and the transmission section 213 is disposed after the forming section 211. The glass panel forming apparatus 2 further includes a heating component 25, a transmission component 26, and a cooling component 27. The heating component 25 and the transmission component 26 are disposed in the heating section 212. The heating component 25 is configured to heat the glass panel 3, and the transmission component 26 is configured to transfer the glass panel 3 from the heating section 212 to the forming section 211. The cooling component 27 is disposed in the forming section 211 and configured to cool the formed glass panel 1. The transmission component 26 is also disposed in the transmission section 213 and configured to transmit the cooled formed glass panel 1.

Specifically, the heating component 25 can be a heating wire, located on opposite sides of the transmission component 26, which can be a transmission roller. It can be understood that a distance between adjacent transmission components 26 is smaller than a distance between corresponding two ends of the glass panel 3, so that the glass panel 3 can be transmitted on the transmission component 26. When the glass panel 3 is transported on the transmission member 26, the heating components 25 distributed on opposite sides of the transmission member 26 uniformly heat the glass panel 3. Heating conditions such as heating temperature and heating time may vary according to requirements of the glass panel 3, which are not limited in the present disclosure. The cooling component 27 may include a grille, which is configured to rapid cool down the formed glass plate 1.

The glass panel 3 is transferred to the carrier 231 of the lower forming mold 23 through the transfer member 26, and is pressed and formed by the upper forming mold 22 and the lower forming mold 23 to form the formed glass panel 1. After the cooling component 27 completes the cooling of the formed glass panel 1, the transmission component 26 further cools and transmits the formed glass panel 1, and finally completes the processing, thereby forming front windshield, rear windshield, sunroof glass, side window glass, etc. applied to vehicles.

It can be understood that in other possible embodiments, the processing chamber 21 is not necessary, and the formed glass panel 1 can be manufactured by forming outside the furnace, which is not limited in the present disclosure.

The present disclosure also provides a vehicle 4, reference is made to FIG. 8 together. FIG. 8 is a top view of a vehicle provided in an embodiment of the present disclosure. The vehicle 4 includes a frame 41 and the formed glass panel 1 as described above, where the frame 41 is used to carry the formed glass panel 1. Specifically, reference is made to the description above for the formed glass panel 1, which will not be further elaborated in the present disclosure.

It can be understood that in this embodiment, the control component 24 controls the second support structure 233 and the first support structure 232 to press against the upper forming mold 22 at different moments, so that the bending tendency opposite to the arc depth direction generated during the forming process of the glass panel 3 can be extended within a time difference between the pressing of the second support structure 233 and the first support structure 232 against the upper forming mold 22, thereby improving the optical refractive performance of the formed glass panel 1 and making the glass forming design applicable to the vehicle 4 more extensive.

Specific examples are used herein to illustrate the principles and embodiments of the present disclosure. The descriptions of the above embodiments are only intended to help understand the core concept of the present disclosure. Meanwhile, for those of ordinary skill in the art, there will be changes in the specific embodiments and application scope based on the idea of the present disclosure. In summary, the content of this specification should not be construed as limiting the present disclosure.

## Claims

1. A formed glass panel, wherein the formed glass panel has a first curvature in a first direction and a second curvature in a second direction, and the first direction and the second direction are perpendicular to each other;
wherein the formed glass panel has first support positions located at edge bending portions and second support positions located between two adjacent edge bending portions, wherein the second support positions start forming prior to the first support positions;
wherein the formed glass panel has an arc depth per meter *d* in the first direction satisfying 30mm/m≤*d*≤80mm/m; and
wherein the formed glass panel has an arc depth per meter *D* in the second direction satisfying 25mm/m≤*D*≤60mm/m.

2. The formed glass panel of claim 1, wherein the formed glass panel has a first smoothness in the first direction of less than or equal to 30°, and a second smoothness in the second direction of less than or equal to 30°.

3. The formed glass panel of claim 2, wherein the first smoothness is less than or equal to 25°, or the first smoothness is less than or equal to 20°, or the first smoothness is less than or equal to 10°, or the first smoothness is less than or equal to 5°, or the first smoothness is less than or equal to 3°; and
wherein the second smoothness is less than or equal to 25°, or the second smoothness is less than or equal to 20°, or the second smoothness is less than or equal to 10°, or the second smoothness is less than or equal to 5°, or the second smoothness is less than or equal to 3°.

4. The formed glass panel of claim 2 or 3, wherein the first smoothness is defines as follows: projecting a plurality of first reflective fringe lines extending substantially in the first direction onto a surface of the formed glass panel, taking any point Xi on one of the plurality of first reflective fringe line, taking two adjacent points Xi-1 and Xi+1 before and after point Xi on the same first reflective fringe line, calculating an included angle α between line segment XiXi-1 and line segment XiXi+1, and taking a supplementary angle of the included angle α as a first smoothness at point Xi; and
wherein the second smoothness is defined as follows: projecting a plurality of second reflective fringe lines extending substantially in the second direction onto the surface of the formed glass panel, taking any point Yi on one of the plurality of second reflective fringe lines, taking two adjacent points Yi-1 and Yi+1 before and after point Yi on the same second reflective fringe line, calculating an included angle β between line segment YiYi-1 and line segment YiYi+1, and taking a supplementary angle of the included angle β as a second smoothness at point Yi.

5. The formed glass panel of claim 4, wherein a length of line segment XiXi-1 and a length of line segment XiXi+1 each range from 1mm to 15mm, and a length of line segment YiYi-1 and a length of line segment YiYi+1 each range from 1mm to 15mm.

6. The formed glass panel of claim 1, wherein when the arc depth per meter of the formed glass panel in the second direction satisfies 25mm/m≤*D*<40mm/m, the arc depth per meter *d* of the formed glass panel in the first direction and the arc depth per meter *D* of the formed glass panel in the second direction satisfy 0.3≤*D*/*d*≤1.4; or
when the arc depth per meter of the formed glass panel in the second direction satisfies 40mm/m≤*D*≤60mm/m, the arc depth per meter *d* of the formed glass panel in the first direction and the arc depth per meter *D* of the formed glass panel in the second direction satisfy 0.5≤*D*/*d*≤2.

7. The formed glass panel of claim 1, wherein a length of the formed glass panel in the first direction is greater than a length of the formed glass panel in the second direction.

8. The formed glass panel of claim 7, wherein the length of the formed glass panel in the first direction is 400mm to 2000mm, and the length of the formed glass panel in the second direction is 400mm to 1400mm.

9. The formed glass panel of any one of claims 1 to 8, wherein the second curvature is greater than the first curvature.

10. The formed glass panel of claim 9, wherein the first curvature is in a range of 400/m to 3000/m, and the second curvature is in a range of 400/m to 3000/m.

11. A glass panel forming method, comprising:
providing a glass panel and heating the glass panel to a forming temperature, wherein the glass panel has first support positions located at edge bending portions and second support positions located between two adjacent edge bending portions;
placing the glass panel heated to the forming temperature between an upper forming mold and a lower forming mold;
using the lower forming mold to support the second support positions first and press the second support positions in cooperation with the upper forming mold, and after a preset duration, using the lower forming mold to further support the first support positions and press both the first support positions and the second support positions in cooperation with the upper forming mold; and
obtaining a formed glass panel.

12. The glass panel forming method of claim 11, wherein the preset duration is 0.1s to 0.6s.

13. The glass panel forming method of claim 11, wherein a total pressing time of the lower forming mold and the lower forming mold on the glass panel is 1s to 6s.

14. A glass panel forming apparatus, wherein the glass panel forming apparatus comprises an upper forming mold and a lower forming mold, the upper forming mold and the lower forming mold are disposed opposite to each other, the lower forming mold is configured to support at least an edge of a glass panel, the lower forming mold comprises a first support structure configured to support edge bending portions of the glass panel, and a second support structure configured to support a part of the glass panel between two adjacent edge bending portions, and the first support structure and the second support structure are movable relative to each other.

15. The glass panel forming apparatus of claim 14, wherein the lower forming mold further comprises a carrier, and the carrier is integrally formed with the first support structure or the second support structure.

16. The glass panel forming apparatus of claim 14, wherein the lower forming mold has a first side, a second side, a third side, and a fourth side, the first side has one end connected to the second side in a bent manner and another end connected to the fourth side in a bent manner, the third side has one end connected to the second side in a bent manner and another end connected to the fourth side in a bent manner, and the first side and the third side are disposed opposite each other; the second support structure is located in the middle of each of the first side, the second side, the third side, and the fourth side, and extends to both sides, the first support structure is located on both sides of each of the first side, the second side, the third side, and the fourth side.

17. The glass panel forming apparatus of claim 14, further comprising a control component, wherein the control component is connected to the first support structure and the second support structure respectively, and is configured to control the first support structure and the second support structure to press against the upper forming mold at different moments respectively.

18. The glass panel forming apparatus of claim 17, wherein the control component is configured to control the second support structure to press against the upper forming mold, and control, after a preset duration, the first support structure to press against the upper forming mold.

19. The glass panel forming apparatus of claim 14, wherein the glass panel forming apparatus further comprises a processing chamber, the processing chamber comprises a forming section, a heating section, and a transmission section, the upper forming mold and the lower forming mold are disposed on opposite sides in the forming section, the heating section is disposed before the forming section, and the transmission section is disposed after the forming section;
wherein the glass panel forming apparatus further comprises:
a heating component and a transmission component, wherein the heating component and the transmission component are disposed in the heating section, the heating component is configured to heat the glass panel, and the transmission component is configured to transfer the glass panel from the heating section to the forming section; and
a cooling component disposed in the forming section and configured to cool the formed glass panel;
wherein the transmission component is also disposed in the transmission section and configured to transmit the cooled formed glass panel.

20. A vehicle, comprising a frame and the formed glass panel of any one of claims 1 to 10, wherein the frame is configured to carry the formed glass panel.
